# EUROPEAN PATENT APPLICATION

(11) **EP 4 227 864 A1**
(43) Date of publication of application: **16.08.2023**
(21) Application number: 20956743.7
(22) Date of filing: 08.10.2020
(51) Int. Cl.: G06N 20/00

(54) **EVALUATION METHOD, EVALUATION DEVICE, AND EVALUATION PROGRAM**

(71) Applicant: FUJITSU LIMITED, Kawasaki-shi, Kanagawa 211-8588 (JP)
(72) Inventor: SHIMIZU, Toshiya, Kawasaki-shi, Kanagawa 211-8588 (JP); HIGUCHI, Yuji, Kawasaki-shi, Kanagawa 211-8588 (JP)
(74) Representative: Hoffmann Eitle
(86) International application number: PCT/JP2020/038178
(87) International publication number: WO 2022/074796

(57) **Abstract**

Conventional methods for evaluating resistance of machine learning models to poisoning attacks have problems that the evaluation needs a huge amount of time and that it is difficult to prepare data. A computer executes processing of generating, based on information indicating a degree of reduction of inference accuracy of a machine learning model to a change in first training data, second training data that reduces the inference accuracy, training the machine learning model by using the second training data, and evaluating the trained machine learning model. With this configuration, in one aspect, it is possible to more efficiently evaluate resistance of a machine learning model to training data that reduces inference accuracy of the machine learning model.

## Description

### FIELD

The present disclosure relates to an evaluation method, an evaluation apparatus, and an evaluation program.

### BACKGROUND

Poisoning attacks, which are one of security problems unique to machine learning, are attacks that intentionally modify machine learning models by mixing abnormal data into training data of the machine learning models to significantly reduce inference accuracy thereof.

Therefore, it is assumed to be important to evaluate in advance how much the machine learning models are contaminated by the poisoning attacks and the inference accuracy is reduced. As evaluation of resistance of a machine learning model to a poisoning attack, for example, there is a method in which a poisoning attack is actually performed to the machine learning model to reduce inference accuracy and evaluating a degree of the reduction. Furthermore, as another evaluation method, there is a method in which a degree of influence of abnormal data by a poisoning attack is evaluated by using an influence function that quantifies an influence of individual pieces of training data on inference of a machine learning model.

### SUMMARY

### TECHNICAL PROBLEM

However, a problem with the evaluation method in which a poisoning attack is actually performed is that it is needed to repeatedly perform, by using a large amount of abnormal data, training of the machine learning model and evaluation of the degree of the reduction of the inference accuracy, which takes a huge amount of time. Furthermore, a problem with the evaluation method in which the influence function is used is that it needs specific preparation of training data for evaluating the degree of influence, but it is difficult to prepare data especially in a case where data input space is wide.

In one aspect, an object is to provide an evaluation method, an evaluation apparatus, and an evaluation program that may more efficiently evaluate resistance of a machine learning model to training data that reduces inference accuracy of the machine learning model.

### SOLUTION TO PROBLEM

In a first proposal, a computer executes processing of generating, based on information that indicates a degree of reduction of inference accuracy of a machine learning model to a change in first training data, second training data that reduces the inference accuracy, training the machine learning model by using the second training data, and evaluating the trained machine learning model.

### ADVANTAGEOUS EFFECTS OF INVENTION

In one aspect, it is possible to more efficiently evaluate resistance of a machine learning model to training data that reduces inference accuracy of the machine learning model.

### BRIEF DESCRIPTION OF DRAWINGS

FIG. 1 is a functional block diagram illustrating a functional configuration of an evaluation apparatus 10 according to a first embodiment.
FIG. 2 is a diagram illustrating an example of training data space according to the first embodiment.
FIG. 3 is a flowchart illustrating a flow of resistance evaluation processing of a machine learning model according to the first embodiment.
FIG. 4 is a flowchart illustrating a flow of update processing of training data according to the first embodiment.
FIG. 5 is a flowchart illustrating a flow of resistance evaluation processing of a machine learning model according to a second embodiment.
FIG. 6 is a diagram for describing a hardware configuration example of the evaluation apparatus 10.

### DESCRIPTION OF EMBODIMENTS

Hereinafter, embodiments of an evaluation method, an evaluation apparatus, and an evaluation program disclosed in the present application will be described in detail with reference to the drawings. Note that this invention is not limited by these embodiments. Furthermore, the individual embodiments may be appropriately combined within a range without inconsistency.

### <mode-for-invention mode-num="1]

### functional Configuration of Evaluation Apparatus 10>

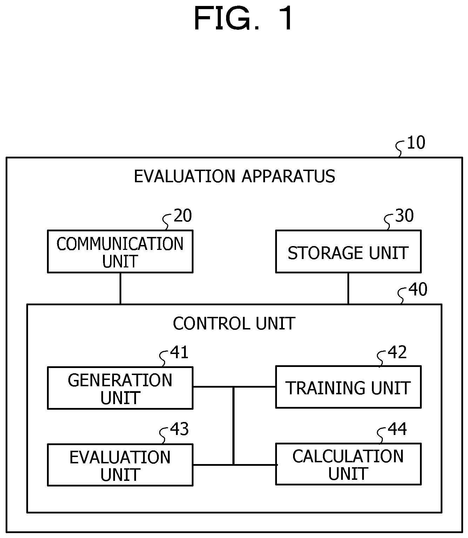

First, a functional configuration of an evaluation apparatus 10 serving as an execution subject of the evaluation method disclosed in the present application will be described. FIG. 1 is a functional block diagram illustrating the functional configuration of the evaluation apparatus 10 according to a first embodiment. As illustrated in FIG. 1, the evaluation apparatus 10 includes a communication unit 20, a storage unit 30, and a control unit 40.

The communication unit 20 is a processing unit that controls communication with another device, and is, for example, a communication interface.

The storage unit 30 is an example of a storage device that stores various types of data and a program to be executed by the control unit 40, and is, for example, a memory, a hard disk, or the like. The storage unit 30 may also store, for example, model parameters for constructing a machine learning model and training data for the machine learning model. Note that the storage unit 30 may also store various types of data other than the specific examples described above.

The control unit 40 is a processing unit that controls the entire evaluation apparatus 10, and is, for example, a processor or the like. The control unit 40 includes a generation unit 41, a training unit 42, an evaluation unit 43, and a calculation unit 44. Note that each of the processing units is an example of an electronic circuit included in the processor or an example of a process executed by the processor.

The generation unit 41 generates training data that reduces inference accuracy in order to evaluate resistance of a machine learning model to poisoning data based on information indicating a degree of reduction of the inference accuracy of the machine learning model to a change in the training data. The training data that reduces the inference accuracy is generated by generating poisoning data that reduces the inference accuracy of the machine learning model for training data used for training of the machine learning model, and adding the poisoning data to the training data used for the training.

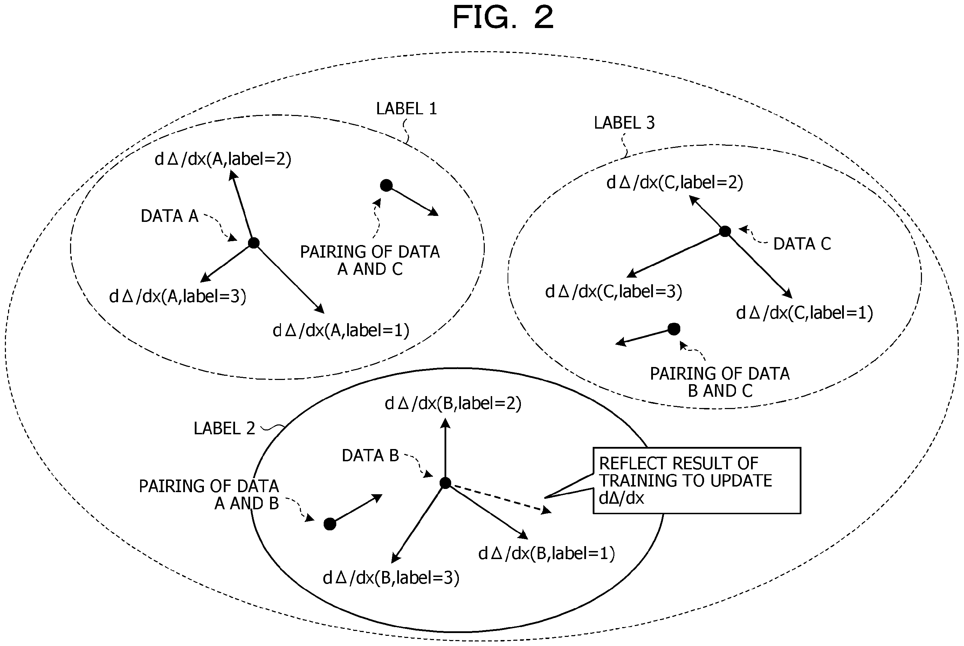

The generation of the poisoning data will be described. FIG. 2 is a diagram illustrating an example of training data space according to the first embodiment. In the example of FIG. 2, description is made assuming that there are three labels, which are labels 1 to 3, in the training data space. First, the generation unit 41 randomly selects data as initial points from clusters of all labels of the training data used for the training of the machine learning model. In the example of FIG. 2, (data A, label 1), (data B, label 2), and (data C, label 3) are randomly selected as initial points from clusters of the labels 1 to 3, respectively. Note that the initial point is, for example, a combination of data and a label that serve as a basis for searching for data having a higher degree of contamination by using a gradient ascent method. A combination of data and a label searched for based on the initial point finally becomes poisoning data.

Furthermore, the generation unit 41 adds, to the initial point, data obtained by assigning one or a plurality of labels different from an original label to each of data selected from each cluster. When description is made by using FIG. 2, for example, since an original label of the data A is the label 1, data obtained by assigning the label 2 or the label 3, which are different labels from the original label, to the data A is added to the initial point. In the example of FIG. 2, since there are a total of six points of data obtained by assigning different labels, including three points × two points for different labels for the three points of the data to which the original labels are assigned, there are a maximum of nine initial points at this point.

Moreover, the generation unit 41 adds, to the initial points, data obtained by pairing data with different labels with each other. Here, the pairing is data conversion, and is conversion that generates one piece of data by using two pieces of data. For example, in a case where there are data x_1 and x_2 in the training data and labels thereof are y_1 and y_2, respectively, pairing between the data (x_1, y_1) and (x_2, y_2) may be calculated by the following expression. Note that, by the pairing, two pieces of data may be generated from one set of data with different labels. When it is assumed that the data x_1 and x_2 are numerical values or vector values, each of the numerical values ranges from a to b, and λ is a real number from 0 to 1, first pairing may be calculated by using Pairing 1 = λ(b - x_1) + (1 - λ)(x_2 - a), y_1) and second pairing may be calculated by using Pairing 2 = (λ(x_1 - a) + (1 - λ)(b - x_2), y_2). Furthermore, in the example of FIG. 2, since there are three labels, there are three combinations with different labels: label 1 - label 2, label 2 - label 3, and label 3 - label 1, and two points of pairing data may be generated for each. Therefore, by the pairing, a total of six points including three combinations with different labels × two points of pairing data are further added as the initial points.

The initial points generated as described above are updated to data with a higher degree of contamination by the calculation unit 44, for example, by using the gradient ascent method. Then, data is updated repeatedly until a predetermined condition is satisfied, and poisoning data that further reduces the inference accuracy of the machine learning model is calculated. Note that the poisoning data is calculated for each initial point, and by adding each piece of the poisoning data to the training data used for training the machine learning model, the generation unit 41 generates a plurality of pieces of training data that reduces the inference accuracy.

The training unit 42 trains a machine learning model by using training data that reduces inference accuracy, which is generated by the generation unit 41, in order to evaluate resistance of the machine learning model to poisoning data. Note that, although a plurality of pieces of training data is generated by the generation unit 41 as described above, the machine learning model is trained by using each of the plurality of pieces of training data in order to evaluate the inference accuracy of the machine learning model in the case of being trained by using each piece of the training data. In other words, a plurality of trained machine learning models is obtained.

The evaluation unit 43 evaluates resistance to poisoning data of a machine learning model trained by the training unit 42 by using training data that reduces inference accuracy. The evaluation is also performed for each of a plurality of trained machine learning models. Furthermore, by using training data generated in advance for evaluation, the evaluation is performed by calculating, by using a loss function, an accuracy difference of inference accuracy between a machine learning model trained by using the training data for evaluation and the machine learning model trained by the training unit 42. In other words, for the machine learning model trained by using the training data for evaluation, a degree to which the inference accuracy of the machine learning model trained by the training unit 42 by using the training data that reduces the inference accuracy is reduced is calculated as the accuracy difference and evaluated.

The calculation unit 44 updates an initial point generated by the generation unit 41 by using the gradient ascent method, and calculates poisoning data that further reduces inference accuracy of a machine learning model. Note that a function used in the gradient ascent method is also calculated by the calculation unit 44. The function may be calculated by using an existing technology or by performing training, and is a function dΔ/dx(X_v, y) for calculating a gradient related to data x of a change amount Δ of a loss function when (data x, label y) is added to training data X_t.

Here, X_v is the "training data generated in advance for evaluation" in the description of the evaluation unit 43, and is data that serves as a reference for evaluating a degree to which the inference accuracy of the machine learning model is reduced for poisoning data. Furthermore, the change amount Δ of the loss function is an accuracy difference of inference accuracy between a machine learning model trained by using the training data X_t for evaluation and a machine learning model trained by using training data X_t ∪ {(x, y)} obtained by adding (data x, label y) to the training data X_t. When it is assumed that the machine learning model trained by using the training data X_t for evaluation is M, the machine learning model trained by using the training data X_t ∪ {(x, y)} is M', and the loss function is L, the calculation unit 44 may calculate the change amount Δ of the loss function L by an expression Δ = L(M', X_v) - L(M, X_v). In other words, the function dΔ/dx(X_v, y) is a function that measures a gradient of the data x for the change amount Δ of the loss function L, which enables measurement of how data x may be updated for the label y to improve or degrade the inference accuracy of the machine learning model.

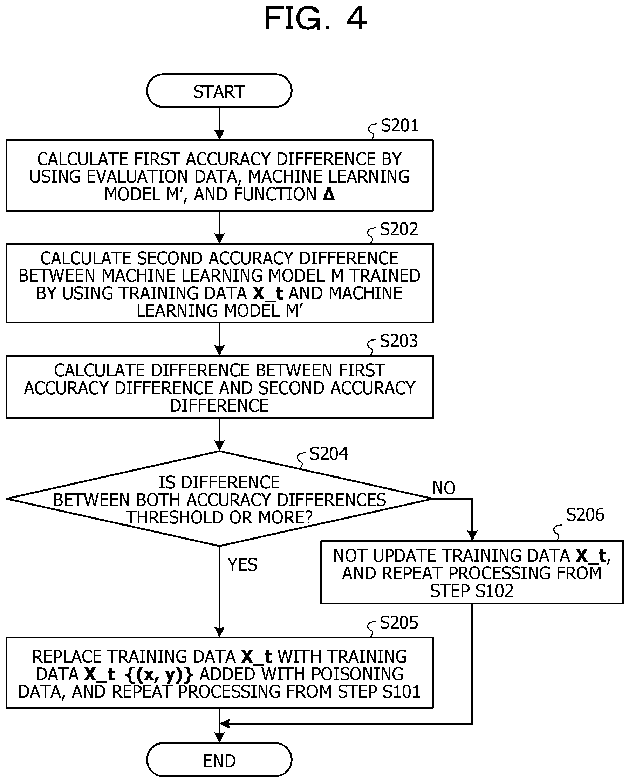

Furthermore, although the details will be described later with reference to FIG. 4, the calculation unit 44 calculates the accuracy difference of the inference accuracy of the machine learning model before and after training using the training data that reduces the inference accuracy.

### [Flow of Processing]

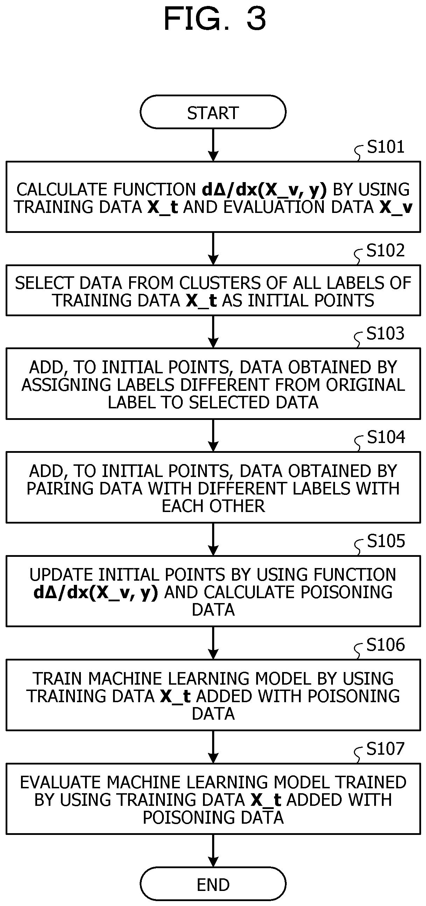

Next, resistance evaluation processing of the machine learning model will be described along a flow of the processing. FIG. 3 is a flowchart illustrating the flow of the resistance evaluation processing of the machine learning model according to the first embodiment. When the resistance evaluation processing is executed, training data X_v for evaluation that serves as a reference for evaluating a degree to which the inference accuracy of the machine learning model is reduced for poisoning data is generated in advance. Furthermore, by using evaluation data X_v, the inference accuracy of the target machine learning model may be calculated in advance by using a loss function.

First, as illustrated in FIG. 3, the evaluation apparatus 10 calculates the function dΔ/dx(X_v, y) by using the training data X_t and the evaluation data X_v (Step S101).

Next, the evaluation apparatus 10 selects data from clusters of all labels of the training data X_t as initial points (Step S102). The data selection from each cluster is performed randomly, for example.

Next, the evaluation apparatus 10 adds, to the initial points, data obtained by assigning labels different from an original label to the data selected in Step S102 (Step S103). Note that the different labels may be assigned to all labels different from the original label, or may be assigned to some different labels.

Next, the evaluation apparatus 10 adds, to the initial points, data obtained by pairing data with different labels with each other (Step S104). As described above, the pairing data is generated at most by the number of combinations of different labels × two points and added as the initial points. Note that the execution order of Steps S103 and S104 may be reversed.

Next, the evaluation apparatus 10 updates each of the initial points generated in Steps S102 to S104 by using the function dΔ/dx(X_v, y) when a label is fixed, and calculates a plurality of pieces of poisoning data (Step S105). The update of the initial points is performed by using, for example, the gradient ascent method. More specifically, for example, when it is assumed that data before the update is (data xi, label y) and data after the update is (data xi+1, label y), the data xi+1 after the update may be calculated by an expression xi+1 = xi + εdΔ/dx(X_v, y). Since the label y is fixed, the label y does not change. A numerical value whose initial value is 0 and which is counted up after each update is i. Therefore, x0 indicates data as the initial point. Furthermore, a parameter called a learning rate, which indicates an amount of movement of the data x, is ε, and ε is set to, for example, a small positive number. By using such an expression, the update of each piece of data at the initial point is repeated until a predetermined condition is satisfied while the label is fixed, thereby calculating poisoning data with a higher degree of contamination. Here, the predetermined condition is, for example, that the number of times of execution of update processing has reached a predetermined threshold, that the update has stopped because there is no difference between the data before and after the update, that the data after the update has deviated from the data as the initial point by a certain amount or more, or the like.

Next, the evaluation apparatus 10 trains the machine learning model by using the training data X_t added with the poisoning data calculated in Step S105 (Step S106). Note that, since the plurality of pieces of poisoning data is calculated in Step S105, the machine learning model is trained by using each piece of the calculated poisoning data to generate a plurality of trained machine learning models.

Then, the evaluation apparatus 10 evaluates the machine learning model trained in Step S106 by using the training data X_t added with the poisoning data (Step S107). Again, since the plurality of trained machine learning models is generated in Step S106, each of the trained machine learning models is evaluated. Specifically, the target machine learning model is evaluated by calculating, by using a loss function, an accuracy difference of the inference accuracy between each of the trained machine learning models generated in Step S106 and the machine learning model trained by using the evaluation data X_v. A larger calculated accuracy difference indicates that the target machine learning model is more contaminated with the poisoning data and has lower resistance to the poisoning data. After the execution of S107, the resistance evaluation processing of the machine learning model illustrated in FIG. 3 ends.

Next, the update processing of the training data will be described along a flow of the processing. FIG. 4 is a flowchart illustrating the flow of the update processing of the training data according to the first embodiment. In this processing, in order to closely approximate influences of the plurality of pieces of poisoning data, the function dΔ/dx(X_v, y) is updated by using the poisoning data each time when the accuracy difference of the inference accuracy of the machine learning model before and after the training using the poisoning data becomes a certain amount or more, and the resistance evaluation processing in FIG. 3 is repeated. Therefore, this processing is executed after the execution of Step S106 of the resistance evaluation processing of the machine learning model illustrated in FIG. 3.

First, as illustrated in FIG. 4, the evaluation apparatus 10 calculates a first accuracy difference by using the evaluation data X_v, the machine learning model M' trained by using the training data X_t added with the poisoning data, and a function Δ for calculating a change amount of the loss function (Step S201). The first accuracy difference may be calculated by an expression Δ(X_t, X_v), where it is assumed that X_t is training data that includes poisoning data in a case where it is assumed that Δ is a function representing the change amount of the value of the loss function in the evaluation data X_v for training data that does not include poisoning data.

Next, the evaluation apparatus 10 calculates a second accuracy difference between a machine learning model M trained by using the training data X_t and the machine learning model M' trained in Step S106 by using the training data X_t added with the poisoning data (Step S202). Similar to the first accuracy difference, the second accuracy difference may also be calculated by using the loss function L by an expression L(M', X_v) - L(M, X_v).

Next, the evaluation apparatus 10 calculates a difference between the first accuracy difference calculated in Step S201 and the second accuracy difference calculated in Step S202 (Step S203). In a case where the difference between both accuracy differences is a predetermined threshold or more (Step S204: Yes), the evaluation apparatus 10 replaces the training data X_t with the training data X_t ∪ {(x, y)} added with the poisoning data, and repeats the processing from S101 (Step S205).

On the other hand, in a case where the difference between both accuracy differences is not the predetermined threshold or more (Step S204: No), the evaluation apparatus 10 does not update the training data X_t, and repeats the processing from Step S102 (Step S206). After the execution of S205 or S206, the update processing of the training data illustrated in FIG. 4 ends.

### <mode-for-invention mode-num="2]

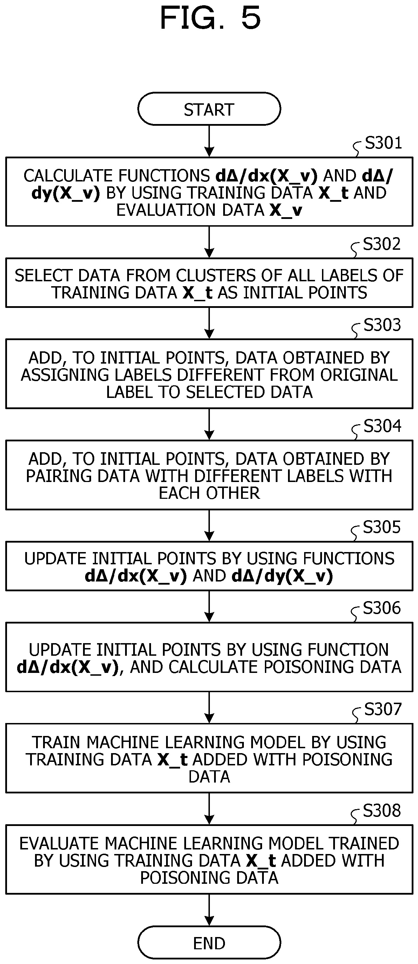

Furthermore, in addition to the first embodiment described with reference to FIG. 3, the following processing indicated as a second embodiment may be adopted as the resistance evaluation processing of the machine learning model. FIG. 5 is a flowchart illustrating a flow of resistance evaluation processing of a machine learning model according to the second embodiment. In the resistance evaluation processing according to the second embodiment, unlike the resistance evaluation processing according to the first embodiment, a gradient for a change amount Δ of a loss is performed not only for data x but also for a label y. Then, in the resistance evaluation processing according to the second embodiment, both data and a label are further updated by a gradient ascent method, and for the optimized data and label, the data x is further updated by the gradient ascent method to calculate poisoning data.

First, as illustrated in FIG. 5, the evaluation apparatus 10 calculates, by using training data X_t and evaluation data X_v, functions dΔ/dx(X_v) and dΔ/dy(X_v) for calculating gradients related to x and y of a change amount Δ of a loss function when (data x, label y) is added to X_t (Step S301). The function dΔ/dy(X_v) for calculating the gradient related to y is a function that measures a gradient of data y for the change amount Δ of a loss function L, and that enables measurement of how the data y may be updated to improve or degrade inference accuracy of the machine learning model. The function dΔ/dy(X_v) may also be calculated by using an existing technology, similar to the function dΔ/dx(X_v).

Steps S302 to S304 are similar to Steps S102 to S104 of the first embodiment. However, when data obtained by assigning different labels is added to the initial points in Step S303, the addition is performed not for all the labels different from the original labels, but for some different labels.

Next, the evaluation apparatus 10 updates each of the initial points generated in Steps S302 to S304 by using the functions dΔ/dx(X_v) and dΔ/dy(X_v) (Step S305). The update of the initial points is performed by using, for example, the gradient ascent method. More specifically, for example, when it is assumed that data before the update is (data xi, label yi) and data after the update is (data xi+1, label yi+1), the data xi+1 after the update may be calculated by an expression xi+1 = xi + εdΔ/dx(X_v) and the data yi+1 after the update may be calculated by an expression yi+1 = xi + εdΔ/dy(X_v). A numerical value whose initial value is 0 and which is counted up after each update is i. Therefore, x0 and y0 indicate data as the initial points. Furthermore, a parameter called a learning rate, which indicates an amount of movement of the data x, is ε, and ε is set to, for example, a small positive number. By using such expressions, the update of each piece of data as the initial point is repeated until a predetermined condition is satisfied. Here, the predetermined condition is, for example, that the number of times of execution of update processing has reached a predetermined threshold, that the update has stopped because there is no difference between the data before and after the update, that the data after the update has deviated from the data as the initial point by a certain amount or more, or the like. Note that the calculated label y may be a decimal value, in which case it is converted to an integer value.

Next, the evaluation apparatus 10 updates and fixes y to a value of a label closest to a value of y for the updated label y, then updates each of the initial points generated in Steps S302 to S304 by using the function dΔ/dx(X_v), and calculates a plurality of pieces of poisoning data (Step S306). As in Step S105, the update of the initial points in Step S306 is also repeated until a predetermined condition is satisfied by using, for example, the gradient ascent method.

Steps S307 and S308 are similar to Steps S106 and S107 of the first embodiment. After the execution of S308, the resistance evaluation processing of the machine learning model illustrated in FIG. 5 ends.

### [Effects]

As described above, the evaluation apparatus 10 generates, based on information indicating a degree of reduction of inference accuracy of a machine learning model to a change in first training data, second training data that reduces the inference accuracy, trains the machine learning model by using the second training data, and evaluates the trained machine learning model.

With this configuration, by searching for and generating poisoning data with a higher degree of contamination for the target machine learning model, and training the machine learning model by using the generated poisoning data, resistance of the machine learning model to the poisoning data may evaluated. Therefore, it is possible to more efficiently evaluate resistance of the machine learning model to training data that reduces the inference accuracy of the machine learning model.

Furthermore, the processing of generating the second training data, which is executed by the evaluation apparatus 10, includes processing of randomly selecting data as an initial point from clusters of all labels of the first training data, adding, to the initial point, data obtained by assigning one or a plurality of labels different from an original label to each piece of the selected data, adding, to the initial point, data obtained by pairing data with different labels with each other, and generating the second training data based on the initial point.

With this configuration, it is possible to generate poisoning data with a higher degree of contamination.

Furthermore, the processing of generating the second training data, which is executed by the evaluation apparatus 10, includes processing of generating a plurality of pieces of the second training data based on a plurality of the initial points, the processing of training the machine learning model includes processing of training the machine learning model by using each piece of the plurality of second training data, and the processing of evaluating the trained machine learning model includes processing of evaluating each of a plurality of the trained machine learning models trained by using each piece of the plurality of second training data.

With this configuration, it is possible to efficiently generate poisoning data with a higher degree of contamination.

Furthermore, the processing of generating the second training data based on the initial point, which is executed by the evaluation apparatus 10, includes processing of updating the initial point by a gradient ascent method, and generating the second training data based on the updated initial point.

With this configuration, it is possible to generate poisoning data with a higher degree of contamination.

Furthermore, the processing of generating the second training data based on the initial point, which is executed by the evaluation apparatus 10, includes processing of updating a label assigned to the initial point by the gradient ascent method, and generating the second training data based on the updated initial point and label.

With this configuration, it is possible to generate poisoning data with a higher degree of contamination.

Furthermore, the processing of evaluating the trained machine learning model, which is executed by the evaluation apparatus 10, includes processing of calculating, by using a function that calculates a change amount of a loss function, a first accuracy difference of the inference accuracy between the machine learning model trained by using the second training data and the machine learning model trained by using the first training data for evaluating the machine learning model, and evaluating the trained machine learning models based on the first accuracy difference.

With this configuration, it is possible to more efficiently evaluate resistance of the machine learning model to the poisoning data.

Furthermore, the evaluation apparatus 10 further executes processing of calculating, by using the loss function, a second accuracy difference of the inference accuracy between the machine learning model trained by using the first training data and the machine learning model trained by using the second training data, replacing, in a case where a difference between the first accuracy difference and the second accuracy difference is a predetermined threshold or more, the first training data with the second training data to generate fourth training data that reduces the inference accuracy, training the machine learning model by using the fourth training data, and evaluating the machine learning model trained by using the fourth training data.

With this configuration, it is possible to closely approximate influences of the plurality of pieces of poisoning data.

Incidentally, while the first and second embodiments of the present disclosure have been described above, the present disclosure may be performed in a variety of different modes in addition to the embodiments described above.

### [System]

The processing procedure, the control procedure, the specific name, and information including various types of data and parameters indicated in the description above or in the drawings may be optionally changed unless otherwise noted. Furthermore, the specific examples, distributions, numerical values, and the like described in the embodiments are merely examples, and may be optionally changed.

Furthermore, each component of each device illustrated in the drawings is functionally conceptual, and does not necessarily have to be physically configured as illustrated in the drawings. In other words, specific modes of distribution and integration of the respective devices are not limited to those illustrated in the drawings. That is, all or a part of the devices may be configured by being functionally or physically distributed or integrated in optional units, according to various types of loads, use situations, or the like. For example, the generation unit 41 and the calculation unit 44 of the evaluation apparatus 10 may be integrated.

Moreover, all or an optional part of the respective processing functions performed in each device may be implemented by a CPU and a program analyzed and executed by the CPU, or may be implemented as hardware by wired logic.

### [Hardware]

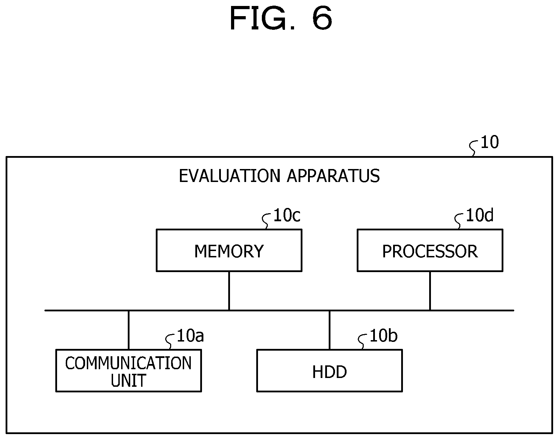

A hardware configuration of the evaluation apparatus 10 described above will be described. FIG. 6 is a diagram illustrating a hardware configuration example of the evaluation apparatus 10. As illustrated in FIG. 6, the evaluation apparatus 10 includes a communication unit 10a, a hard disk drive (HDD) 10b, a memory 10c, and a processor 10d. Furthermore, the respective units illustrated in FIG. 6 are mutually coupled by a bus or the like.

The communication unit 10a is a network interface card or the like, and communicates with another server. The HDD 10b stores programs and data that operate the functions illustrated in FIG. 1.

The processor 10d reads, from the HDD 10b or the like, a program that executes processing similar to that of each processing unit illustrated in FIG. 1, and loads the read program into the memory 10c, thereby operating a process that executes each function described with reference to FIG. 1. For example, this process executes a function similar to that of each processing unit included in the evaluation apparatus 10. Specifically, for example, the processor 10d reads, from the HDD 10b or the like, a program having functions similar to those of the generation unit 41, the training unit 42, and the like. Then, the processor 10d executes a process that executes processing similar to that of the generation unit 41, the training unit 42, and the like.

As described above, the evaluation apparatus 10 operates as an information processing apparatus that executes each processing by reading and executing a program. Furthermore, the evaluation apparatus 10 may also implement functions similar to those of the embodiments described above by reading the program described above from a recording medium by a medium reading device and executing the read program described above. Note that the program referred to in another embodiment is not limited to being executed by the evaluation apparatus 10. For example, the present disclosure may be similarly applied to a case where another computer or server executes the program, or a case where these computer and server cooperatively execute the program.

Note that this program may be distributed via a network such as the Internet. Furthermore, this program may be recorded in a computer-readable recording medium such as a hard disk, a flexible disk (FD), a CD-ROM, a magneto-optical disk (MO), or a digital versatile disc (DVD), and may be executed by being read from the recording medium by a computer.

### CITATION LIST

### NON-PATENT DOCUMENT

Non-Patent Document 1: "Towards Poisoning of Deep Learning Algorithms with Backgradient Optimization", L. Munoz-Gonzalez, B. Biggio, A. Demontis, A. Paudice, V. Wongrassamee, E. C. Lupu, and F. Roli
Non-Patent Document 2: "Understanding Black-box Predictions via Influence Functions", K. W. Pang, L. Percy

### REFERENCE SIGNS LIST

- 10: Evaluation apparatus
- 10a: Communication unit
- 10b: HDD
- 10c: Memory
- 10d: Processor
- 20: Communication unit
- 30: Storage unit
- 40: Control unit
- 41: Generation unit
- 42: Training unit
- 43: Evaluation unit
- 44: Calculation unit

## Claims

1. An evaluation method executed by a computer, the evaluation method comprising processing of:
generating, based on information that indicates a degree of reduction of inference accuracy of a machine learning model to a change in first training data, second training data that reduces the inference accuracy;
training the machine learning model by using the second training data; and
evaluating the trained machine learning model.

2. The evaluation method according to claim 1, wherein
the processing of generating the second training data includes processing of:
randomly selecting data as an initial point from clusters of all labels of the first training data;
adding, to the initial point, data obtained by assigning one or a plurality of labels different from an original label to each piece of the selected data;
adding, to the initial point, data obtained by pairing data with different labels with each other; and
generating the second training data based on the initial point.

3. The evaluation method according to claim 2, wherein
the processing of generating the second training data includes processing of generating a plurality of pieces of the second training data based on a plurality of the initial points,
the processing of training the machine learning model includes processing of training the machine learning model by using each piece of the plurality of second training data, and
the processing of evaluating the trained machine learning model includes processing of evaluating each of a plurality of the trained machine learning models trained by using each piece of the plurality of second training data.

4. The evaluation method according to claim 2 or 3, wherein
the processing of generating the second training data based on the initial point includes processing of:
updating the initial point by a gradient ascent method; and
generating the second training data based on the updated initial point.

5. The evaluation method according to claim 4, wherein
the processing of generating the second training data based on the initial point includes processing of:
updating a label assigned to the initial point by the gradient ascent method; and
generating the second training data based on the updated initial point and label.

6. The evaluation method according to claim 1, wherein
the processing of evaluating the trained machine learning model includes processing of:
calculating, by using a function that calculates a change amount of a loss function, a first accuracy difference of the inference accuracy between the machine learning model trained by using the second training data and the machine learning model trained by using the first training data; and
evaluating the trained machine learning models based on the first accuracy difference.

7. The evaluation method executed by the computer according to claim 6, the evaluation method further comprising processing of:
calculating, by using the loss function, a second accuracy difference of the inference accuracy between the machine learning model trained by using the first training data and the machine learning model trained by using the second training data;
replacing, in a case where a difference between the first accuracy difference and the second accuracy difference is a predetermined threshold or more, the first training data with the second training data to generate fourth training data that reduces the inference accuracy;
training the machine learning model by using the fourth training data; and
evaluating the machine learning model trained by using the fourth training data.

8. An evaluation apparatus comprising:
a generation unit that generates, based on information that indicates a degree of reduction of inference accuracy of a machine learning model to a change in first training data, second training data that reduces the inference accuracy;
a training unit that trains the machine learning model by using the second training data; and
an evaluation unit that evaluates the trained machine learning model.

9. An evaluation program for causing a computer to perform processing including:
generating, based on information that indicates a degree of reduction of inference accuracy of a machine learning model to a change in first training data, second training data that reduces the inference accuracy;
training the machine learning model by using the second training data; and
evaluating the trained machine learning model.
